# EUROPÄISCHE PATENTSCHRIFT

(11) **EP 1 897 723 B1**
(45) Veröffentlichungstag und Bekanntmachung des Hinweises auf die Patenterteilung: **11.03.2009**
(21) Anmeldenummer: 07015440.6
(22) Anmeldetag: 07.08.2007
(51) Int. Cl.: B60J 7/12

(54) **Cabrioletverdeck**
Convertible soft top
Capote de cabriolet

(30) Priorität: 08.09.2006 DE 102006042260
(43) Veröffentlichungstag der Anmeldung: 12.03.2008
(73) Patentinhaber: Dr. Ing. h.c. F. Porsche Aktiengesellschaft, 70435 Stuttgart (DE)
(72) Erfinder: Beierl, Dominik, 70825 Korntal-Münchingen (DE); Hermann, Felix, 71229 Leonberg (DE); Schulz, Lars, 15566 Schöneiche (DE); Braun, Wolfgang, 73095 Albershausen (DE)

(56) Entgegenhaltungen:
- EP-A- 1 112 878
- DE-C1- 19 515 541
- DE-U1- 20 210 763
- FR-A- 548 437

## Beschreibung

Die vorliegende Erfindung betrifft ein Verdeck für ein Cabriolet mit den Merkmalen des Oberbegriffs des Anspruchs 1 wie beispielsweise in der EP 1 112 878 beschrieben ist. Die Erfindung betrifft außerdem ein mit einem derartigen Verdeck ausgestattetes Cabriolet.

Aus der DE 100 29 471 B4 ist ein Verdeck für ein Cabriolet bekannt, das ein Gestänge aufweist, mit dem mehrere Dachabschnitte zwischen einer Schließstellung und einer Offenstellung verstellbar sind. In der Schließstellung sind die Dachabschnitte in Fahrtrichtung hintereinander angeordnet. In der Offenstellung sind zumindest einzelne Dachabschnitte übereinander angeordnet. Der bei geschlossenem Verdeck in Fahrtrichtung hinterste Dachabschnitt ist als Heckscheibenrahmen zur Aufnahme einer Heckscheibe ausgestaltet. Beim bekannten Verdeck sind die bei geschlossenem Verdeck in Fahrtrichtung vor dem Heckscheibenrahmen angeordneten Dachabschnitte durch Querspriegel gebildet, die durch einen daran aufgespannten flexiblen Überzug miteinander verbunden sind. Zum Steuern der Kinematik der Querspriegel besitzt das Gestänge an jeder Fahrzeugseite zumindest einen Steuerlenker, der an einer am Fahrzeug zu befestigenden Konsole schwenkbar gelagert ist. Des Weiteren weist das Gestänge einen sich von der einen Fahrzeugseite zur anderen Fahrzeugseite erstreckenden Spannbügel auf, auf dem der Heckscheibenrahmen bei geschlossenem Verdeck aufliegt. Ferner umfasst das Gestänge ein Kopplungsgestänge zum Steuern der Kinematik des Heckscheibenrahmens, wozu das Kopplungsgestänge auf jeder Fahrzeugseite jeweils einen vorderen Kopplungslenker und einen hinteren Kopplungslenker aufweist. Dabei sind die Kopplungslenker jeweils einerseits am Spannbügel und jeweils andererseits am Heckscheibenrahmen schwenkbar gelagert.

Beim bekannten Verdeck erfolgt die Ansteuerung des Heckscheibenrahmens dadurch, dass einerseits der Spannbügel an seinen Enden an den Konsolen schwenkbar gelagert und mit Hilfe eines entsprechenden Stellantriebs zur Durchführung von Schwenkbewegungen angetrieben ist. Andererseits ist der Heckscheibenrahmen in den flexiblen Überzug eingebunden. Durch die Verstellbewegung des Spannbügels wird über die Kopplungslenker und über die Anbindung des Heckscheibenrahmens an den Überzug eine Zwangsverstellung des Heckscheibenrahmens erreicht.

Aus der DE 100 29 473 A1 ist ein weiteres Cabrioletverdeck bekannt, bei welchem zur Kopplung des Heckscheibenrahmens mit dem Spannbügel anstelle hinterer Kopplungslenker jeweils eine Führungsbaugruppe verwendet wird. Zusätzlich ist der jeweilige vordere Kopplungslenker über eine Führungsstrebe mit einem Steuerlenker gekoppelt, um so besagten Steuerlenker bei einer Schwenkverstellung des Spannbügels zum Verschwenken antreiben zu können.

Ein weiteres Cabrioletverdeck dieser Art ist aus der DE 100 29 478 B4 bekannt.

Die vorliegende Erfindung beschäftigt sich mit dem Problem, für ein Verdeck der eingangs genannten Art bzw. für ein damit ausgestattetes Cabriolet eine verbesserte oder zumindest eine andere Ausführungsform anzugeben, die sich insbesondere durch eine reduzierte Schwingungsneigung des Verdecks auch bei größeren Geschwindigkeiten des damit ausgestatteten Fahrzeugs auszeichnet.

Dieses Problem wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, am Spannbügel für den jeweiligen hinteren Kopplungslenker einen vorderen und einen hinteren Anschlag auszubilden, an denen der hintere Kopplungshebel in der Offenstellung bzw. in der Schließstellung des Verdecks zur Anlage kommt. Mit Hilfe dieser Anschläge kann für den Heckscheibenrahmen und den Spannbügel in der Schließstellung und in der Offenstellung des Verdecks jeweils eine vorbestimmte Relativlage definiert werden, wodurch gleichzeitig in der jeweiligen Verdeckstellung eine Lagefixierung des Spannbügels und des Heckscheibenrahmens erfolgt. Durch die verbesserte Positionierung und durch die verstärke Fixierung von Spannbügel und Heckscheibenrahmen in den Endstellungen des Verdecks ergibt sich eine erhöhte Stabilität des Verdecks und lassen sich Relativbewegungen zwischen Heckscheibenrahmen und Spannbügel reduzieren.

Bei einer vorteilhaften Ausführungsform der Erfindung kann das Gestänge so ausgestaltet sein, dass der jeweilige hintere Kopplungslenker in der Offenstellung unter Vorspannung am hinteren Anschlag anliegt bzw. in der Schließstellung unter Vorspannung am vorderen Anschlag anliegt. Durch die vorgespannte Anlage der hinteren Kopplungshebel am jeweiligen Anschlag kann die Tendenz zu Relativbewegungen zwischen Heckscheibenrahmen und Spannbügel weiter reduziert werden. Insbesondere kann dadurch auch die Gefahr einer Geräuschentwicklung reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht auf ein Verdeck im Bereich eines Heckscheibenrahmens,
- Fig. 2: eine vergrößerte Ansicht auf ein Detail II in Fig. 1 in einer Schließstellung des Verdecks,
- Fig. 3: eine Ansicht wie in Fig. 2, jedoch in einer Offenstellung des Verdecks.

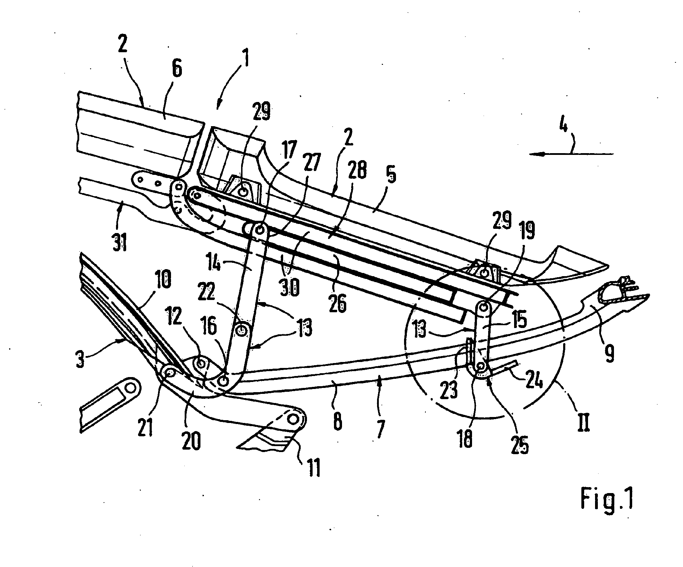

Entsprechend Fig. 1 weist ein Verdeck 1 mehrere Dachabschnitte 2 auf, von denen hier jedoch nur zwei dargestellt sind. Das Verdeck 1 umfasst außerdem ein Gestänge 3, das dazu dient, die Dachabschnitte 2 zwischen einer in Fig. 1 angedeuteten Schließstellung und einer Offenstellung zu verstellen. Im montierten Zustand befindet sich das Verdeck 1 an einem hier nicht gezeigten Cabriolet und dient in seiner Schließstellung zum Verschließen eines Fahrzeuginnenraums.

Die einzelnen Dachabschnitte 2 sind als flächige Bauteile ausgestaltet und schließen in der Schließstellung des Verdecks 1 in einer durch einen Pfeil angedeuteten Fahrtrichtung 4 aneinander an. Hierdurch bilden die hintereinander angeordneten Dachabschnitte 2 in der Schließstellung des Verdecks 1 eine von vorn nach hinten geschlossen durchgehende Dachkontur. Das Verdeck 1 kann zwei, drei, vier oder mehr Dachabschnitte 2 aufweisen. Bevorzugt ist eine Ausführungsform mit vier Dachabschnitten 2. Der bei geschlossenem Verdeck 1 in Fahrtrichtung 4 hinterste Dachabschnitt 2 ist dabei als Heckscheibenrahmen 5 ausgebildet, der zur Aufnahme einer hier nicht gezeigten Heckscheibe dient. Der bei geschlossenem Verdeck 1 in Fahrtrichtung 4 vorderste Dachabschnitt 2 ist vorzugsweise als Integraldachrahmen ausgestaltet. Sofern drei oder mehr Dachabschnitte 2 vorgesehen sind, sind die in der Schließstellung des Verdecks 1 zwischen dem Integraldachrahmen und dem Heckscheibenrahmen 5 angeordneten Dachabschnitte 2 als Flächenspriegel ausgestaltet. Bei vier Dachabschnitten 2 sind dann ein vorderer oder erster Flächenspriegel sowie ein hinterer oder zweiter Flächenspriegel 6 vorgesehen.

Das Gestänge 3 umfasst einen Spannbügel 7, der in einer Ansicht von oben U-förmig oder C-förmig ausgestaltet ist. Somit besitzt der Spannbügel 7 auf jeder Fahrzeugseite einen Schenkel 8 sowie eine die beiden Schenkel 8 miteinander verbindende Basis 9. Der Spannbügel 7 schließt im Bereich seiner Basis 9 in der Schließstellung des Verdecks 1 nach hinten an den Heckscheibenrahmen 5 an und dient insgesamt dazu, einen Spalt zu verschließen, der in der Schließstellung des Verdecks 1 zwischen dem Verdeck 1 und einem nicht gezeigten Verdeckkastendeckel entsteht. Besagter Verdeckkastendeckel dient zum Verschließen eines hier nicht gezeigten, im Cabriolet ausgebildeten Verdeckkastens, in dem das Verdeck 1, zumindest die Dachabschnitte 2, abgelegt und verstaut sind, wenn das Verdeck 1 geöffnet ist. Um den Raumbedarf dieses Verdeckkastens möglichst klein zu halten, ist das Gestänge 3 so ausgestaltet, dass es die einzelnen Dachabschnitte 2 zur Realisierung einer Kinematik ansteuern kann, die dazu führt, dass die Dachabschnitte 2 in der Offenstellung des Verdecks 1 übereinander angeordnet sind. Ein kompaktes Packmaß lässt sich insbesondere dadurch realisieren, dass die Dachabschnitte 2 bei geöffnetem Verdeck 1 quasi aufeinander gestapelt angeordnet sind, derart, dass bei jedem Dachabschnitt 2 die Innenseite nach unten weist und die Außenseite nach oben weist. Unter "Innenseite" wird bei den Dachabschnitten 2 im vorliegenden Zusammenhang jeweils diejenige Seite verstanden, die bei geschlossenem Verdeck 1 dem Fahrzeuginnenraum zugewandt ist und dort einen Abschnitt des Dachhimmels bildet. Die jeweilige Außenseite der Dachabschnitte 2 befindet sich dann an der vorn Fahrzeuginnenraum abgewandten Seite. Sofern das Verdeck 1 genau vier Dachabschnitte 2 aufweist, wird eine Kinematik bevorzugt, bei welcher in der Offenstellung des Verdecks 1 der zweite Flächenspriegel 6 unterhalb des Heckscheibenrahmens 5, und insbesondere oberhalb des Spannbügels 7, angeordnet ist. Der Integraldachrahmen und der erste-Flächenspriegel sind dann oberhalb des Heckscheibenrahmens 5 angeordnet, wobei der erste Flächenspriegel vorzugsweise zwischen dem Heckscheibenrahmen 5 und dem Integraldachrahmen positioniert ist. Durch diese Anordnung lässt sich eine besonders kompakte Konfiguration für die Offenstellung des Verdecks 1 erzielen. Ein kleiner Verdeckkasten ist insbesondere bei Fahrzeugen mit Heckmotor vorteilhaft.

Vorzugsweise ist das Gestänge 3 so ausgestaltet, dass es in der Schließstellung des Verdecks 1 an beiden Fahrzeugseiten jeweils einen seitlichen Dachrahmen bildet. Zwischen diesen beiden Dachrahmen sind die Dachabschnitte 2 angeordnet.

Des Weiteren kann das Verdeck 1 bei einer bevorzugten Ausführungsform mit einem hier nicht gezeigten flexiblen Überzug versehen sein. Dieser Überzug ist dabei am Verdeck 1 so angebracht, dass er bei geschlossenem Verdeck 1 an jeder Fahrzeugseite zumindest das Gestänge 3 überzieht. Somit weist das Verdeck 1 zumindest im Bereich der seitlichen Dachrahmen ein Stoffdach auf. Vorzugsweise sind mit dem Überzug zusätzlich die Dachabschnitte 2 überzogen, wobei beim Heckscheibenrahmen 5 die Heckscheibe im Überzug ausgespart ist. Bei dieser Ausführungsform ist dann das gesamte Verdeck 1 als Stoffdach ausgestaltet. Zweckmäßig ist dabei der jeweilige Überzug am Spannbügel 7 eingespannt. Dabei bilden die durch den Überzug verdeckten Dachabschnitte 2 aufgrund ihrer flächigen Ausgestaltung eine entsprechende flächige und formgebende Unterstützung für den Überzug. Hierdurch lässt sich eine im Hinblick auf herkömmliche Stoffdächer, deren Überzug mit Hilfe von mehreren Spriegeln aufgespannt ist, eine kontinuierliche Dachkontur realisieren, die aerodynamische Vorteile besitzt. Durch die verbesserte Aerodynamik lassen sich die am geschlossenen Verdeck 1 während des Fahrbetriebs des damit ausgestatteten Cabriolets angreifenden Kräfte reduzieren. Dadurch kann die Tendenz zur Geräuschbildung in Richtung größerer Geschwindigkeiten verschoben werden.

Das Gestänge 3 weist auf jeder Fahrzeugseite einen Steuerlenker 10 auf, mit dessen Hilfe zumindest ein Dachabschnitt 2 verstellbar ist, der bei geschlossenem Verdeck 1 vor dem Heckscheibenrahmen 5 angeordnet ist. Beispielsweise ist der jeweilige Steuerlenker 10 bei einem mit vier Dachabschnitten 2 versehenen Verdeck 1 direkt mit dem ersten Flächenspriegel verbunden. In jedem Fall ist der jeweilige Steuerlenker 10 an einer Konsole 11 schwenkbar gelagert. Im montierten Zustand des Verdecks 1 ist die jeweilige Konsole 11 an einer Karosserie des Cabriolets befestigt. Der Spannbügel 7 ist an seinen freien Enden seiner Schenkel 8 jeweils an einem der Steuerlenker 10 schwenkbar gelagert, und zwar an einer mit 12 bezeichneten Lagerstelle. Dementsprechend erstreckt sich der Spannbügel 7 von einer Fahrzeugseite zur anderen Fahrzeugseite, wobei sich die Schenkel 8 im wesentlichen in Fahrzeuglängsrichtung erstrecken, während sich die Basis 9 quer dazu sowie horizontal erstreckt. In der Schließstellung des Verdecks 1 liegt der Heckscheibenrahmen 5 in seinem hinteren Bereich über eine hier nicht dargestellte Dichtung zumindest entlang der Basis 9 am Spannbügel 7 an.

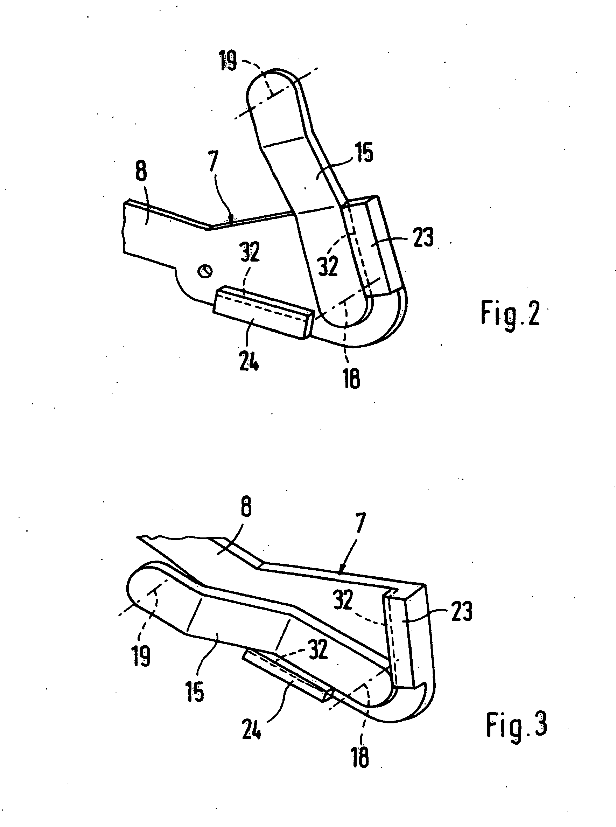

Das Gestänge 3 umfasst nun ein Kopplungsgestänge 13, mit dessen Hilfe die Kinematik des Heckscheibenrahmens 5 steuerbar ist. Dazu weist besagtes Kopplungsgestänge 13 auf jeder Fahrzeugseite jeweils einen vorderen Kopplungslenker 14 und jeweils einen hinteren Kopplungslenker 15 auf: Jeder vordere Kopplungslenker 14 ist einenends bei 16 am Spannbügel 7 und anderenends bei 17 am Heckscheibenrahmen 5 schwenkbar gelagert. Jeder hintere Kopplungslenker 15 ist einenends bei 18 am Spannbügel 7 und anderenends bei 19 am Heckscheibenrahmen 5 schwenkbar gelagert. Des Weiteren umfasst das Kopplungsgestänge 13 vorzugsweise auf jeder Fahrzeugseite einen Antriebslenker 20, der einenends bei 21 am jeweiligen Steuerlenker 10 und anderenends bei 22 am jeweiligen vorderen Kopplungslenker 14 schwenkbar gelagert ist. Die genannten und noch zu nennenden schwenkbaren Lagerungen besitzen - soweit nichts anderes angegeben ist - jeweils eine Schwenkachse, die sich quer zur Fahrzeuglängsrichtung und horizontal erstreckt. Derartige Schwenkachsen sind in den Fig. 2 und 3 für die Lagerstellen 18 und 19 durch strichpunktierte Linien angedeutet.

Erfindungsgemäß sind nun am Spannbügel 7 zumindest auf einer Fahrzeugseite, vorzugsweise jedoch auf beiden Fahrzeugseiten, für den jeweiligen hinteren Kopplungslenker 15 ein vorderer Anschlag 23 sowie ein hinterer Anschlag 24 ausgebildet. Die Anschläge 23, 24 sind auf die Kinematik des Spannbügels 7 und des Heckscheibenrahmens 5 so abgestimmt, dass der jeweilige hintere Kopplungslenker 15 bei geschlossenem Verdeck 1 am vorderen Anschlag 23 anliegt und bei geöffnetem Verdeck 1 am hinteren Anschlag 24 anliegt. Mit Hilfe der Anschläge 23, 24 lässt sich somit für die beiden Endstellungen des Verdecks 1 jeweils eine Relativlage zwischen Heckscheibenrahmen 5 und Spannbügel 7 definieren bzw. vorgeben. Gleichzeitig kann durch die Anschläge 23, 24, an welchen der jeweilige hintere Kopplungslenker 15 in den genannten Endstellungen anliegt, eine Lagefixierung sowohl für den Spannbügel 7 als auch für den Heckscheibenrahmen 5 realisiert werden, was die Stabilität des Verdecks 1 in den Endstellungen verbessert. Darüber hinaus führen die Anschläge 23, 24 zu einer erhöhten Funktionssicherheit des Verdecks 1.

Gemäß einer bevorzugten Ausführungsform der Erfindung ist das Gestänge 3, welches das Kopplungsgestänge 13 umfasst, so auf den Spannbügel 7 und den Heckscheibenrahmen 5 abgestimmt, dass sich zumindest in einer der beiden Endstellungen des Verdecks 1, vorzugsweise jedoch in beiden Endstellungen des Verdecks 1, für den jeweiligen hinteren Kopplungslenker 15 eine vorgespannte Anlage am vorderen Anschlag 23 bzw. am hinteren Anschlag 24 ergibt. Durch die Anlage unter Vorspannung zwischen hinterem Kopplungslenker 15 und dem jeweiligen Anschlag 23, 24 wird eine weitere Stabilisierung für die Relativlage zwischen Heckscheibenrahmen 5 und Spannbügel 7 erreicht. Des Weiteren wird hierdurch für den Fahrbetrieb des Cabriolets eine Tendenz zu Relativbewegungen zwischen Heckscheibenrahmen 5 und Spannbügel 7 und somit die Gefahr einer Geräuschbildung signifikant reduziert. Durch die vorgespannte Anlage der hinteren Kopplungslenker 15 an den Anschlägen 23, 24 wird für den Heckbereich des Verdecks 1 in dessen Endlagen eine Verspannung realisiert, die sich auf die Stabilität des gesamten Verdecks 1 positiv auswirkt.

Bei der in Fig. 1 gezeigten Ausführungsform sind die beiden Anschläge 23, 24 integral an einem Anschlagkörper 25 ausgebildet, der separat vorn Spannbügel 7 hergestellt ist und der an den Spannbügel 7 angebaut ist. Grundsätzlich können die Anschläge 23, 24 auch integral am Spannbügel 7 ausgebildet sein. Ebenso ist es möglich, einen der Anschläge 23, 24 integral am Spannbügel 7 und den jeweils anderen Anschlag 23, 24 integral am Anschlagkörper 25 auszubilden.

Entsprechend Fig. 1 kann die Lagerstelle 17, in welcher der jeweilige vordere Kopplungslenker 14 am Heckscheibenrahmen 5 schwenkbar gelagert ist, in einer Führung 26 verstellbar gelagert sein, die am Heckscheibenrahmen 5 ausgebildet ist. Vorzugsweise ist besagte Führung 26 als Linearführung ausgestaltet, die sich im wesentlichen parallel zu einer nicht eingezeichneten Ebene des Heckscheibenrahmens 5 erstreckt, wodurch sich die genannte Lagerstelle 17 entlang des Heckscheibenrahmens 5 verstellen kann. Zu diesem Zweck kann der jeweilige vordere Kopplungslenker 14 über einen Gleitstein 27 in der Führung 26 gleitend verstellbar sein, wobei der vordere Kopplungslenker 14 zur Ausbildung besagter Lagerstelle 17 schwenkbar an diesem Gleitstein 27 gelagert ist. Anstelle eines Gleitsteins 27 kann auch eine Rolle oder ein beliebiger anderer Wälzkörper verwendet werden.

Im gezeigten Beispiel ist die Führung 26 nicht unmittelbar am Heckscheibenrahmen 5, sondern in einem Kulissenkörper 28 ausgebildet, der bezüglich des Heckscheibenrahmens 5 separat hergestellt ist und der an den Heckscheibenrahmen 5 angebaut ist. Entsprechende Befestigungsstellen sind hier mit 29 angedeutet. Es ist klar, dass auf jeder Fahrzeugseite ein derartiger Kulissenkörper 28 vorgesehen ist. Vorzugsweise ist der jeweilige hintere Kopplungslenker 15 nicht direkt, sondern über den Kulissenkörper 28 am Heckscheibenrahmen 5 gelagert. Dementsprechend ist die zugehörige Lagerstelle 19 hier am Kulissenkörper 28 ausgebildet.

Der Kulissenkörper 28 kann wie hier weitere Führungen 30 enthalten, die beispielsweise mit einem weiteren Kopplungsgestänge 31 zusammenwirken, mit dessen Hilfe der an den Heckscheibenrahmen 5 bei geschlossenem Verdeck 1 nach vorn anschließenden Dachabschnitt 2, z.B. der zweite Flächenspriegel 6, zum Einstellen der Offenstellung relativ zum Heckscheibenrahmen 5 absenkbar und unter den Heckscheibenrahmen 5 verfahrbar ist.

Durch eine Schwenkverstellung des Steuerlenkers 10 werden einerseits der Spannbügel 7 und andererseits über den Antriebslenker 20 der Heckscheibenrahmen 5 zu Verstellbewegungen angetrieben. Ein eigener Antrieb für den Spannbügel 7 ist beim erfindungsgemäßen Verdeck 1 entbehrlich. Der Steuerlenker 10 kann seinerseits über einen hier nicht gezeigten Hauptsteuerlenker angetrieben sein, der mit einem geeigneten Stellantrieb gekoppelt ist.

Die Fig. 2 und 3 zeigen vergrößerte Ansichten auf einen der hinteren Kopplungslenker 15, und zwar von innen nach außen, während in Fig. 1 die Ansicht auf den Heckbereich des Verdecks 1 von außen nach innen erfolgt. Bei den Ausführungsformen der Fig. 2 und 3 sind die beiden Anschläge 23, 24 integral am Spannbügel 7 ausgebildet, wobei der Spannbügel 7 nur teilweise dargestellt ist. Erkennbar ist der jeweilige hintere Kopplungslenker 15 zwischen seinen Lagerstellen 18, 19 doppelt abgekröpft, wodurch sich ein seitlicher Versatz in Richtung der Schwenkachsen für die Lagerstellen 18, 19 ergibt.

In Fig. 2 liegt der hintere Kopplungslenker 15 am vorderen Anschlag 23 an, so dass hier die Schließstellung des Verdecks 1 wiedergegeben ist. In der in Fig. 3 wiedergegebenen Offenstellung des Verdecks 1 liegt der hintere Kopplungslenker 15 am hinteren Anschlag 24 an. Um zwischen dem hinteren Kopplungslenker 15 und dem jeweiligen Anschlag 23, 24 Relativbewegungen zu reduzieren und/oder um die Vorspannung in der Anlage des hinteren Kopplungslenkers 15 am jeweiligen Anschlag 23, 24 zu realisieren bzw. zu verstärken, wenn sich das Verdeck 1 in einer seiner Endstellungen befindet, kann vorgesehen sein, zumindest einen der Anschläge 23, 24 an der dem hinteren Kopplungslenker 15 zugewandten Seite mit einem durch eine strichpunktierte Linie angedeuteten Dämpfungsbelag oder Dämpferelement 32 zu versehen, der bzw. das sich bei dagegen gedrücktem hinteren Kopplungslenker 15 elastisch verformt, dadurch als Feder wirkt und entsprechende Rückstellkräfte erzeugt, die die Vorspannung zwischen hinterem Kopplungslenker 15 und dem jeweiligen Anschlag 23, 24 verstärken. Darüber hinaus kann der jeweilige Dämpfungsbelag 25 Schwingungen zwischen dem hinteren Kopplungslenker 15 und dem jeweiligen Anschlag 23, 24 dämpfen.

## Patentansprüche

1. Verdeck für ein Cabriolet,
- mit einem Gestänge (3), mit dem mehrere Dachabschnitte (2) zwischen einer Schließstellung, in welcher die Dachabschnitte (2) in Fahrtrichtung (4) hintereinander angeordnet sind, und einer Offenstellung verstellbar sind, in der die Dachabschnitte (2) übereinander angeordnet sind,
- wobei der bei geschlossenem Verdeck (1) in Fahrtrichtung hinterste Dachabschnitt (2) als Heckscheibenrahmen (5) zur Aufnahme einer Heckscheibe ausgestaltet ist,
- wobei das Gestänge (3) auf jeder Fahrzeugseite einen Steuerlenker (10) zum Steuern der Kinematik wenigstens eines bei geschlossenem Verdeck (1) in Fahrtrichtung (4) vor dem Heckscheibenrahmen (5) liegenden Dachabschnitts (2) aufweist, der an einer Konsole (11) schwenkbar gelagert ist, die am Fahrzeug befestigbar oder befestigt ist,
- wobei das Gestänge (3) einen sich von der einen Fahrzeugseite zur anderen Fahrzeugseite erstreckenden Spannbügel (7) aufweist,
- wobei das Gestänge (3) ein Kopplungsgestänge (13) zum Steuern der Kinematik des Heckscheibenrahmens (5) aufweist, das auf jeder Fahrzeugseite jeweils einen vorderen Kopplungslenker (14) und einen hinteren Kopplungslenker (15) aufweist,
- wobei jeder dieser Kopplungslenker (14, 15) einerseits am Spannbügel (7) und andererseits am Heckscheibenrahmen (5) schwenkbar gelagert ist,
**dadurch gekennzeichnet,**
**dass** am Spannbügel (7) zumindest auf einer Fahrzeugseite für den jeweiligen hinteren Kopplungslenker (15) ein vorderer Anschlag (23), an dem der jeweilige hintere Kopplungslenker (15) bei geschlossenem Verdeck (1) anliegt, und ein hinterer Anschlag (24) ausgebildet sind, an dem der jeweilige hintere Kopplungslenker (15) bei geöffnetem Verdeck (1) anliegt.

2. Verdeck nach Anspruch 1, **dadurch gekennzeichnet, dass** das Gestänge (3) so ausgestaltet ist, dass der jeweilige hintere Kopplungslenker (15) in der Offenstellung unter Vorspannung am hinteren Anschlag (24) anliegt und/oder in der Schließstellung unter Vorspannung am vorderen Anschlag (23) anliegt.

3. Verdeck nach Anspruch 1 oder 2, **dadurch gekennzeichnet, dass** der Spannbügel (7) auf beiden Fahrzeugseiten mit seinen Enden am jeweiligen Steuerlenker (10) schwenkbar gelagert ist.

4. Verdeck nach einem der Ansprüche 1 bis 3, **dadurch gekennzeichnet, dass** das Kopplungsgestänge (3) auf jeder Fahrzeugseite einen Antriebslenker (20) aufweist, der einerseits am jeweiligen Steuerlenker (10) und andererseits am jeweiligen vorderen Kopplungslenker (14) schwenkbar gelagert ist.

5. Verdeck nach einem der Ansprüche 1 bis 4, **dadurch gekennzeichnet,**
- **dass** der jeweilige Anschlag (23, 24) integral an einem Anschlagkörper (25) ausgebildet ist, der an den Spannbügel (7) angebaut ist, oder
- **dass** der jeweilige Anschlag (23, 24) integral am Spannbügel (7) ausgebildet ist.

6. Verdeck nach einem der Ansprüche 1 bis 5, **dadurch gekennzeichnet, dass** eine Lagerstelle (17), in welcher der jeweilige vordere Kopplungslenker (14) am Heckscheibenrahmen (5) schwenkbar gelagert ist, in einer am Heckscheibenrahmen (5) ausgebildeten Führung (26) verstellbar gelagert ist.

7. Verdeck nach Anspruch 6, **dadurch gekennzeichnet, dass** die Führung (26) in einem Kulissenkörper (28) ausgebildet ist, der an den Heckscheibenrahmen (5) angebaut ist.

8. Verdeck nach Anspruch 7, **dadurch gekennzeichnet, dass** der jeweilige hintere Kopplungshebel (15) am jeweiligen Kulissenkörper (28) schwenkbar gelagert ist.

9. Verdeck nach einem der Ansprüche 1 bis 8, **dadurch gekennzeichnet, dass** das Verdeck (1) einen flexiblen Überzug aufweist, der das Gestänge (3) oder das Gestänge (3) und die Dachabschnitte (2) zumindest teilweise überzieht.

10. Verdeck nach einem der Ansprüche 1 bis 9, **dadurch gekennzeichnet, dass** die Dachabschnitte (2) als flächige Bauteile ausgestaltet sind, derart, dass sie bei geschlossenem Verdeck (1) eine sich in Fahrtrichtung von vorn nach hinten geschlossen erstreckende Dachkontur bilden.

11. Cabriolet mit einem Verdeck (1) nach einem der Ansprüche 1 bis 10.

## Claims

1. Top for a convertible,
- with a linkage (3) with which a plurality of roof sections (2) can be displaced between a closed position, in which the roof sections (2) are arranged one behind another in the direction of travel (4), and an open position, in which the roof sections (2) are arranged one above another,
- wherein the rearmost roof section (2) in the direction of travel, when the top (1) is closed, is configured as a rear window frame (5) for receiving a rear window,
- wherein the linkage (3) has, on each side of the vehicle, a control link (10) for controlling the kinematics of at least one roof section (2) which, when the top (1) is closed, is located in front of the rear window frame (5) in the direction of travel (4) and is mounted pivotably on a bracket (11) which can be fastened or is fastened to the vehicle,
- wherein the linkage (3) has a clamping hoop (7) which extends from one side of the vehicle to the other side of the vehicle,
- wherein the linkage (3) has a coupling linkage (13) for controlling the kinematics of the rear window frame (5), said coupling linkage having, on each side of the vehicle, a front coupling link (14) and a rear coupling link (15),
- wherein each of these coupling links (14, 15) is mounted pivotably firstly on the clamping hoop (7) and secondly on the rear window frame (5),
**characterized in that**, for the respective rear coupling link (15), there is formed on the clamping hoop (7), at least on one side of the vehicle, a front stop (23) against which the respective rear coupling link (15) bears when the top (1) is closed, and a rear stop (24) against which the respective rear coupling link (15) bears when the top (1) is open.

2. Top according to Claim 1, **characterized in that** the linkage (3) is configured in such a manner that, in the open position, the respective rear coupling link (15) bears under prestress against the rear stop (24) and/or, in the closed position, bears under prestress against the front stop (23).

3. Top according to Claim 1 or 2, **characterized in that**, on both sides of the vehicle, the clamping hoop (7) is mounted pivotably with its ends on the respective control link (10).

4. Top according to one of Claims 1 to 3, **characterized in that** the coupling linkage (3) on each side of the vehicle has a driving link (20) which is mounted pivotably firstly on the respective control link (10) and secondly on the respective front coupling link (14).

5. Top according to one of Claims 1 to 4, **characterized**
- **in that** the respective stop (23, 24) is formed integrally on a stop body (25) which is attached to the clamping hoop (7), or
- **in that** the respective stop (23, 24) is formed integrally on the clamping hoop (7).

6. Top according to one of Claims 1 to 5, **characterized in that** a bearing point (17), in which the respective front coupling link (14) is mounted pivotably on the rear window frame (5), is mounted displaceably in a guide (26) formed on the rear window frame (5).

7. Top according to Claim 6, **characterized in that** the guide (26) is formed in a slotted link body (28) which is attached to the rear window frame (5).

8. Top according to Claim 7, **characterized in that** the respective rear coupling lever (15) is mounted pivotably on the respective slotted link body (28).

9. Top according to one of Claims 1 to 8, **characterized in that** the top (1) has a flexible covering which at least partially covers the linkage (3) or the linkage (3) and the roof sections (2).

10. Top according to one of Claims 1 to 9, **characterized in that** the roof sections (2) are configured as sheet-like components in such a manner that, when the top (1) is closed, they form a roof contour extending in a closed manner from the front to the rear in the direction of travel.

11. Convertible with a top (1) according to one of Claims 1 to 10.

## Revendications

1. Capote pour un cabriolet,
- comprenant une tringlerie (3), avec laquelle plusieurs portions de toit (2) peuvent être déplacées entre une position de fermeture, dans laquelle les portions de toit (2) sont disposées les unes derrière les autres dans la direction de conduite (4), et une position d'ouverture, dans laquelle les portions de toit (2) sont disposées les unes au-dessus des autres,
- la portion de toit (2) la plus en arrière dans la direction de conduite, lorsque la capote (1) est fermée, étant réalisée sous forme de cadre de vitre arrière (5) pour recevoir une vitre arrière,
- la tringlerie (3) de chaque côté du véhicule présentant un bras de commande (10) pour commander la cinématique d'au moins une portion de toit (2) située avant le cadre de vitre arrière (5) dans la direction de conduite (4), lorsque la capote (1) est fermée, ladite portion de toit étant montée de manière à pouvoir pivoter sur une console (11) qui peut être fixée ou qui est fixée au véhicule,
- la tringlerie (3) présentant un arceau de tensionnement (7) s'étendant depuis un côté du véhicule jusqu'à l'autre côté du véhicule,
- la tringlerie (3) présentant une tringlerie d'accouplement (13) pour commander la cinématique du cadre de vitre arrière (5), qui présente de chaque côté du véhicule à chaque fois un bras d'accouplement avant (14) et un bras d'accouplement arrière (15),
- chacun de ces bras d'accouplement (14, 15) étant monté de manière pivotante d'une part sur l'arceau de tensionnement (7) et d'autre part sur le cadre de vitre arrière (5),
**caractérisée en ce que**
une butée avant (23), sur laquelle s'applique le bras d'accouplement arrière respectif (15) lorsque la capote (1) est fermée, et une butée arrière (24), sur laquelle s'applique le bras d'accouplement arrière respectif (15) lorsque la capote (1) est ouverte, sont réalisées sur l'arceau de tensionnement (7) au moins d'un côté du véhicule, pour le bras d'accouplement arrière respectif (15).

2. Capote selon la revendication 1, **caractérisée en ce que** la tringlerie (3) est configurée de telle sorte que le bras d'accouplement arrière respectif (15) s'applique dans la position ouverte avec une précontrainte contre la butée arrière (24) et/ou dans la position fermée avec une précontrainte contre la butée avant (23).

3. Capote selon la revendication 1 ou 2, **caractérisée en ce que** l'arceau de tensionnement (7) est monté de manière à pouvoir pivoter des deux côtés du véhicule avec ses extrémités sur le bras de commande respectif (10).

4. Capote selon l'une quelconque des revendications 1 à 3, **caractérisée en ce que** la tringlerie d'accouplement (3) présente de chaque côté du véhicule un bras d'entraînement (20) qui est monté de manière pivotante d'une part sur le bras de commande respectif (10) et d'autre part sur le bras d'accouplement avant respectif (14).

5. Capote selon l'une quelconque des revendications 1 à 4, **caractérisée en ce que**
- la butée respective (23, 24) est réalisée intégralement sur un corps de butée (25) qui est monté sur l'arceau de tensionnement (7), ou
- la butée respective (23, 24) est réalisée intégralement sur l'arceau de tensionnement (7).

6. Capote selon l'une quelconque des revendications 1 à 5, **caractérisée en ce qu'**un point de palier (17), dans lequel le bras d'accouplement avant respectif (14) est monté de manière pivotante sur le cadre de vitre arrière (5), est monté de manière déplaçable dans un guide (26) réalisé sur le cadre de vitre arrière (5).

7. Capote selon la revendication 6, **caractérisée en ce que** le guide (26) est réalisé dans un corps de coulisse (28) qui est monté sur le cadre de vitre arrière (5).

8. Capote selon la revendication 7, **caractérisée en ce que** le levier d'accouplement arrière respectif (15) est monté de manière pivotante sur le corps de coulisse respectif (28).

9. Capote selon l'une quelconque des revendications 1 à 8, **caractérisée en ce que** la capote (1) présente un revêtement flexible, qui recouvre au moins en partie la tringlerie (3) ou la tringlerie (3) et les portions de toit (2).

10. Capote selon l'une quelconque des revendications 1 à 9, **caractérisée en ce que** les portions de toit (2) sont configurées sous forme de composants plats de telle sorte qu'elles forment un contour de toit fermé s'étendant dans la direction de conduite de l'avant vers l'arrière lorsque la capote (1) est fermée.

11. Cabriolet comprenant une capote (1) selon l'une quelconque des revendications 1 à 10.
